# EUROPEAN PATENT SPECIFICATION

(11) **EP 2 786 784 B1**
(45) Date of publication and mention of the grant of the patent: **10.11.2021**
(21) Application number: 14382132.0
(22) Date of filing: 04.04.2014
(51) Int. Cl.: A62B 3/00, A62B 99/00, B60S 9/04, B66F 3/00

(54) **Stabilisation system for supporting a vehicle or the like during accident rescue operations**
Stabilisierungssystem zum Stützen eines Fahrzeugs oder dergleichen bei Unfallrettungsoperationen
Système de stabilisation destiné à supporter un véhicule ou analogue lors des opérations de sauvetage en cas d'accident

(30) Priority: 05.04.2013 ES 201330489
(43) Date of publication of application: 08.10.2014
(73) Proprietor: Borderia Gomar, Josep Raimon, 46840 Valencia (ES)
(72) Inventor: Borderia Gomar, Josep Raimon, 46840 Valencia (ES)
(74) Representative: Isern Patentes y Marcas S.L.

(56) References cited:
- US-A- 1 860 014
- US-A- 4 641 813
- US-A1- 2003 218 157
- US-A1- 2007 170 405

## Description

### OBJECT OF THE INVENTION

The purpose of the invention patent application herein is to register a stabilisation system for supporting a vehicle or the like that incorporates significant innovations and advantages.

More specifically, the invention proposes the development of a stabilisation system that includes a stabiliser device, which is particularly suitable for supporting a vehicle or the like in the event of the vehicle being involved in an accident while rescuing the occupants from inside the vehicle, where in accordance with established protocols the vehicle must be prevented from moving both horizontally and vertically in order not to cause further harm to the occupants.

### BACKGROUND OF THE INVENTION

While vehicles nowadays are increasingly well equipped with safety devices and systems, accidents are still inevitable. In the case where a vehicle has an accident and ends up in any position and, most notably, in a partially or completely overturned position, it is common to use stabilisation devices to keep the car immobilised in order to facilitate removal of the occupants from inside the vehicle.

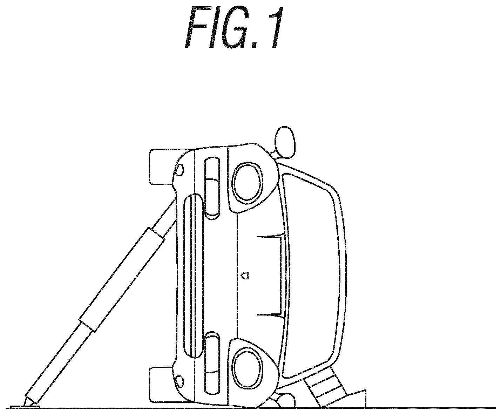

To stabilise a vehicle, various elements and devices used in standardised protocols for critical situations such as those previously described are known in the state of the art. Thus, it is common to use a wide range of chocks or wedges of different sizes that need to be placed at different points to immobilise the collided vehicle, which entails them being transported from the rescue vehicle and their positioning by the different operators (firefighters, police, etc.) according to the vehicle height at each point where they need to be positioned, without causing vertical movements. Once the collided vehicle has been stabilised, it is then handled, which often requires the removal of part of the vehicle body in order to remove the occupants, causing the vehicle to become lighter and move upwards by thrusting the damper systems of the vehicle, which requires the vehicle to be restabilised, once again handling and readjusting the shims and wedges used. On other occasions, struts are used that are placed on one side of the vehicle, which protrude from the vehicle area and hinder rescue manoeuvres thereabout. Figure 1 shows the use of both the aforementioned devices on an upturned vehicle. A known stabilisation system is disclosed in US 1,860,014.

The applicant is not aware of an invention that has all the characteristics described herein.

### DESCRIPTION OF THE INVENTION

The invention herein has been developed to provide a stabilisation system that is considered a novelty within the field of application and resolves the aforementioned drawbacks, further providing other additional advantages that will be apparent from the description detailed hereinafter.

It is therefore an object of this invention to provide a stabilising system for supporting a vehicle or the like, according to claim 1.

Thanks to the characteristics, having a large number of wedges or shims of different dimensions is avoided, as the height adjustment means can be used to position the stabiliser device at a predetermined height at any time.

According to another aspect of the stabiliser device of the invention herein, the height adjustment means have an exteriorly-threaded elongated rod which is superiorly connected to the support region, wherein said rod can be coupled to a threaded orifice on a, preferably flat, portion affixed to the piston extending axially upwards and downwards.

Preferably, the threaded orifice mentioned above consists of a threaded nut.

In an alternative embodiment of the invention, the stabiliser device may have two support regions, each provided with height adjustment means for adjusting the height between each of the support regions and the movable piston, allowing use of the device in a wide range of vehicles of varying sizes, from motor vehicles to all-terrain vehicles, etc.

Preferably, the elongated rod and the support region may be joined together by means of a ball joint. In this way, the support region can be positioned angularly in the most appropriate manner when in contact with the vehicle body.

According to the invention, the locking means comprise a gripping portion, preferably fixed on the aforementioned flat end at the top of the piston which can be resiliently coupled to a rotary retainer.

Additionally, the locking means include elastic means for rotating the rotary retainer.

In a preferred embodiment of the invention, the positioning means comprise a toothed elongated region coupled to the cylinder and a grip which can be coupled to the toothed region, which is associated with the elongated body and can be rotated, and elastic means that actuate the grip.

Preferably, the grip is connected to the elongated body by means of an outwardly-projecting extension on which a rotary pivot can be pivoted, that passes through an orifice which is transversely arranged in the grip. Additionally, the grip can be moved laterally by means of the rotary pivot or pin, which facilitates its positioning on the surface of the device without interacting with the toothed region, which facilitates picking up the device and placing it in its locking position. Once in this position, the grip is positioned again on the toothed region ready for actuation when the device is extended.

Also preferably, the support region to be in contact with the vehicle to be handled consists of an elongated plate.

Advantageously, the elongated plate has a non-planar upper surface, which makes it easier to attach the stabiliser device to the sheet metal of the vehicle body.

According to another characteristic of the invention, the elongated body is connected inferiorly to a base platform.

Advantageously, the base platform has gripping means to facilitate transportation, said gripping means, in a preferred embodiment, being two handles positioned facing each other.

Additionally, the upper portion affixed to the cylinder-piston assembly includes handles that makes it easier to pick up the device by means of a connecting manoeuver performed between the handles and the gripping means described above, thereby enabling the actuation of the locking means that prevent the piston from inadvertently extending.

By using the above defined stabiliser device, once it is positioned in an initial rescue manoeuver and the people restrained inside are then removed, when part of the bodywork is removed for this and the vehicle moves upwards by means of a damper system, the stabiliser devices used are automatically positioned to the new vehicle height without the rescue crew having to stabilise the vehicle again, since the pressure of the piston and the positioning mechanism automatically actuate in this new stabilisation position, making it easier for the operators to handle the vehicle.

Additionally, the stabilisation system may comprise a pusher element which has an elongated body similar to a step which is formed by two longitudinal members on which a plurality of crossmembers are arranged, the lower end of the pusher element being rotably coupled to a support base while an area near the upper end of the pusher element is removably coupled to the piston, wherein the stabiliser device is arranged on said support base.

In this manner, when a vehicle is partially overturned on its side (see Figure 1) or even completely overturned, this pusher element provides a greater bearing surface for the stabiliser device on the ground or floor as well as an increased clamping surface with the vehicle to be handled, thereby ensuring vehicle immobility.

In a preferred embodiment, the rotary connection of the pusher element on the support base is manufactured easily and simply by using a fixed axis, arranged on the support base, wherein said axis is located in a corresponding housing in the pusher element.

To ensure correct positioning, the support base has positioning means for fixedly positioning the stabiliser device on said support base, a pair of parallel guides separated from each other being an example of such positioning means, between which the stabiliser device can be slidably inserted.

Other features and advantages of the stabilisation system which is the subject matter of this invention will become obvious from the description of a preferred, though non-exclusive, embodiment, which is illustrated by means of a non-limiting example in the attached drawings, in which:

### BRIEF DESCRIPTION OF THE DRAWINGS

Figure 1.- Side elevation schematic view of a stabilisation system of the prior art;
Figure 2.- Front elevation view of one embodiment of the stabiliser device that forms part of the stabilisation system according to the invention herein provided with a support region;
Figure 3.- Detailed side elevation view of the lower region of the stabiliser device;
Figure 4.- Font elevation view of the stabiliser device shown in Figure 2 where the support region has been moved;
Figure 5.- Front perspective view of the stabiliser device provided with two support regions;
Figure 6.- Perspective view of an accessory to be incorporated into a stabiliser device
Figure 7. - Side elevation view of a stabiliser device provided with the accessory shown in Figure 6;
Figure 8.- Perspective view of an embodiment of the pusher element along with the support base; and
Figure 9.- Side elevation view corresponding to the pusher element and the support base shown in the preceding figure, including the stabiliser device.

### DESCRIPTION OF A PREFERRED EMBODIMENT

In view of the mentioned figures and according to the adopted numbering, an example can be seen therein, which comprises the parts and elements indicated and described in detail below.

Therefore, as shown in the accompanying figures, the stabiliser device, generally indicated with the reference (1), is designed to support a vehicle when removing the vehicle occupants in the event of the vehicle breaking down following an accident.

More particularly, the stabiliser device (1) essentially comprises an elongated body (2) with a substantially rectangular and internally hollow base which is made of steel, and which is also attached to a lower base (3) platform. This elongated body (2) includes a cylinder (not shown) on the inside which is coupled to an axially extendible piston (4) through the elongated body (2) which is attached to a support region intended to be in contact with a surface of the vehicle to be supported, which consists of an elongated plate (5). It should be noted that the upper end of the piston (4) is joined by threading to a flat end (40) in the form of a plate.

Advantageously, the aforementioned base platform (3) has gripping means which are comprised of two handles (6) positioned facing each other.

In order to maintain properly positioned and immobilised the vehicle to be handled, height adjustment means are provided for adjusting the height between the elongated plate (5) and the movable piston (4).

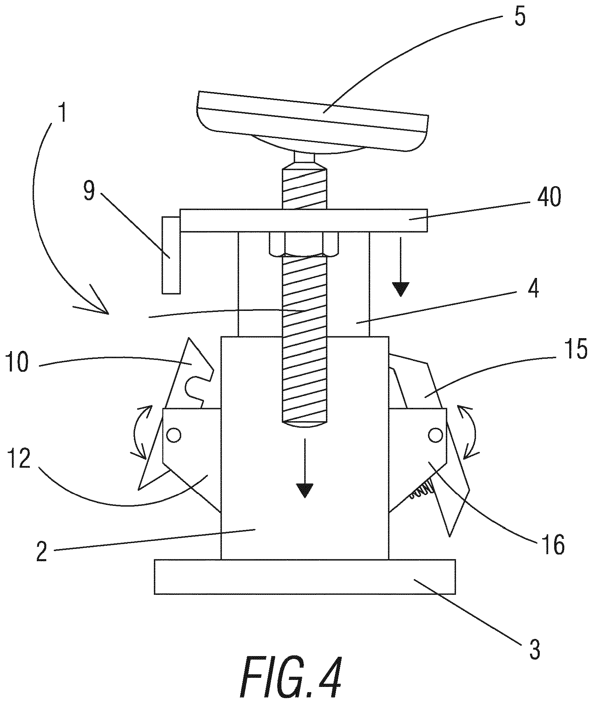

Making particular reference to such height adjustment means, there is mainly an elongated rod (7) extending perpendicular to the base (3) platform, being exteriorly threaded along its entire length which is superiorly connected to the elongated plate (5), wherein said rod (7) can be coupled to a nut (8) and which is positioned and fixedly soldered preferably below the flat end (40). In this way, the user can manually adjust the height of the elongated plate (5) by raising or lowering the rod (7), as seen in Figure 4 by the use of arrows.

Additionally, the stabiliser device (1) includes locking means for securing the position of the piston (4) relative to the cylinder, in the non-operational or deactivated position, as well as positioning means for positioning the piston relative to the elongated body (2), that actuate on extension or activation of the stabiliser device (1), which is detailed below.

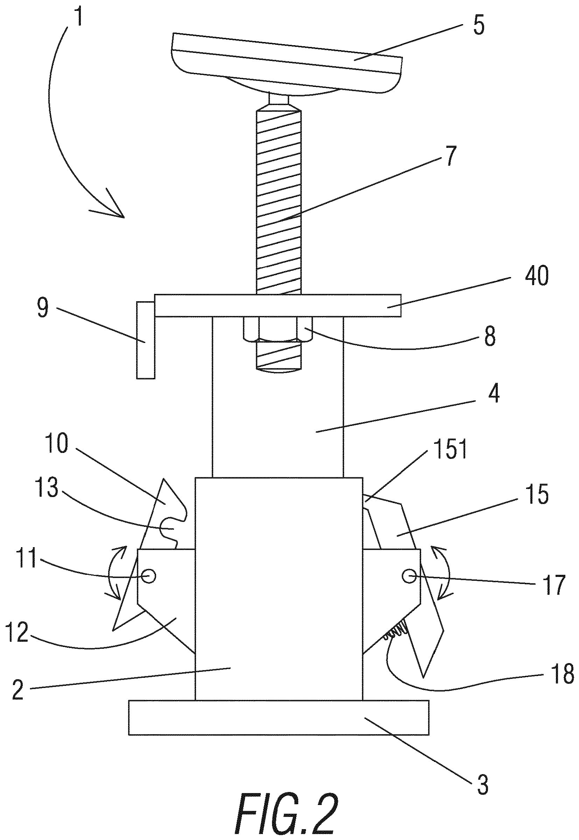

Making particular reference now to the locking means: they comprise a gripping portion (9) formed by a profile in the form of a "U" that projects from one side of the flat end (40) which can be resiliently coupled to a rotary retainer (10) which rotates (as indicated by arrows in Figure 2) via a pin (11) which crosses through said rotary retainer (10) and is coupled to a support (12) that projects laterally from the elongated body (2). Securing the rotary retainer (10) on the gripping portion (9 ) is carried out using a notch (13) that is present on the underside of said rotary retainer (10). Additionally, the flat end (40) includes handles (41) that project laterally and make the pick-up operation easier for the stabiliser device (1) by means of a connecting manoeuver performed between the handles (41) and the handles (6) described above, thereby enabling the actuation of the locking means that prevent the piston from inadvertently extending.

This locking mechanism maintains the retained or pick-up position of the device for storage and transport, once the device is placed on the stabilisation point of the vehicle, the rotary retainer (10) is disengaged from the gripping portion (9) and permits activation of the stabiliser device by extension thereof caused by the cylinder and the piston (4).

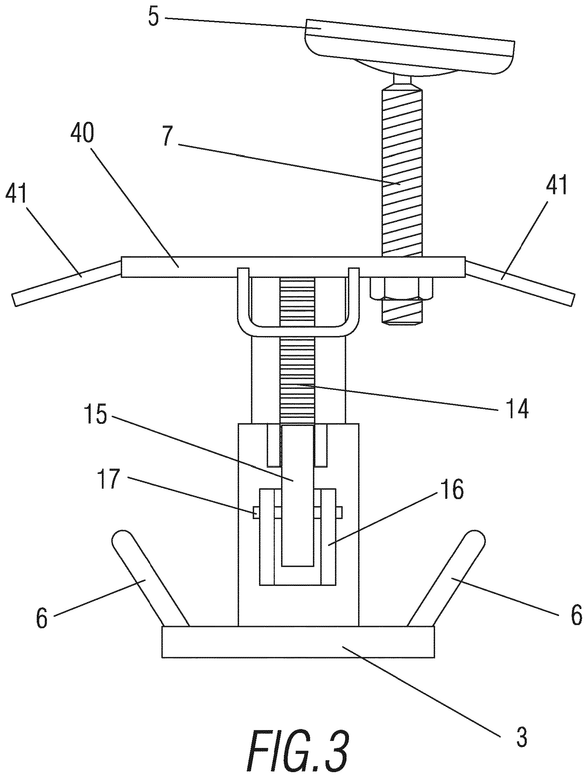

Now, with reference to the positioning means, they comprise an elongated toothed region (14) connected to the cylinder such that it extends longitudinally relative to said cylinder and a grip (15) that can be coupled to said toothed region (14), said grip (15) being associated with the elongated body (2) by an extension formed by a support (16) that projects outwardly on which rotary pivot (17) is arranged which passes through the grip (15), as shown more clearly in Figure 3. The positioning means further have an elastic spring (18) to return the grip (15) to its initial position once it has been operated manually. It should be noted that the grip (15) can also be moved linearly on the rotary pivot (17) such that when picking up or closing the stabiliser device (1) the grip (15) can be positioned such that it is not interacting with the toothed region (14). The rotary pivot (17) may consist of a rod with a threaded portion coupled to a nut.

The grip (15) makes contact with the toothed elongated region (14) by means of an inclined projection (151) protruding from the upper end of said grip (15).

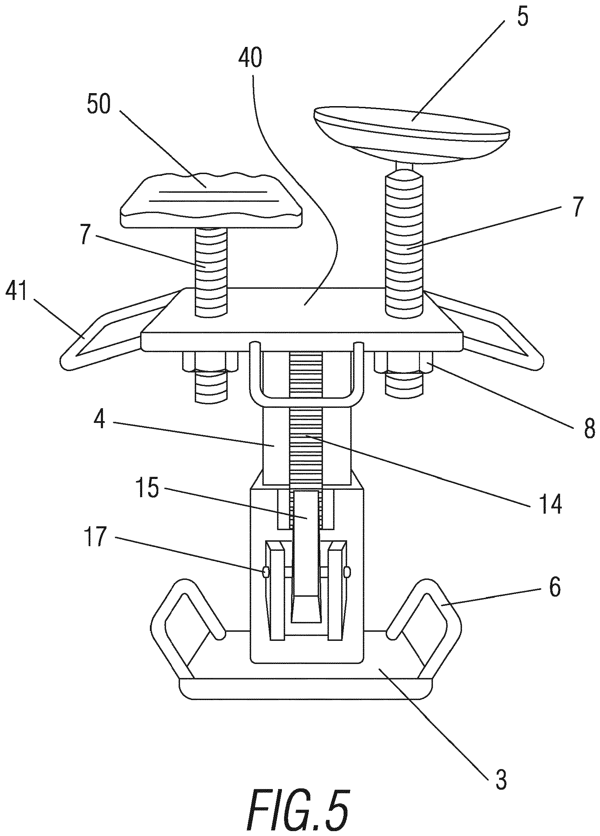

In the embodiment shown in Figure 5, the stabiliser device (1) is similar to that shown in Figures 1 and 2, therefore the same elements have the same reference numbers, the main difference being the fact that it has two support regions (5, 50) each provided with height adjustment means identical to those described above, therefore it is not necessary to go into greater detail in the description thereof, one of said support regions (50) formed by an elongated plate having a non-planar upper surface.

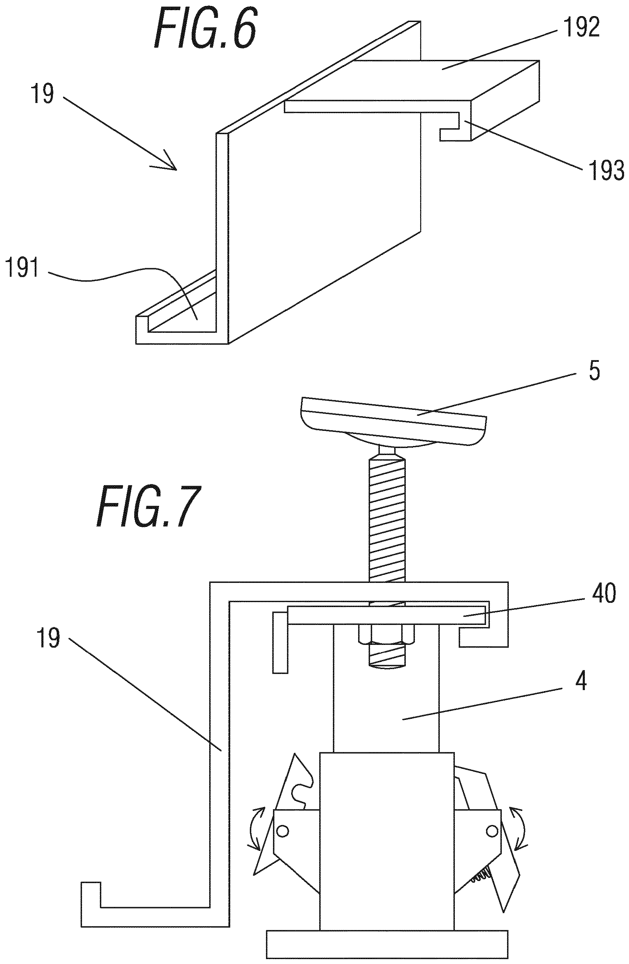

Figures 6 and 7 show an accessory that is suitable, for example, when there is no space for inserting part of the stabiliser device (1) under the collided car due, for example, to the wheels of the vehicle being deflated. This accessory (19) that can be removably mounted on the piston (4) is formed by a body that has an additional contact zone (191) to come into contact with part of the vehicle body to be handled and an attachment zone (192) that can be adapted to the dimensions of the top of the piston (4) having a substantially flat elongated shape, that has a hook extension (193) at one end.

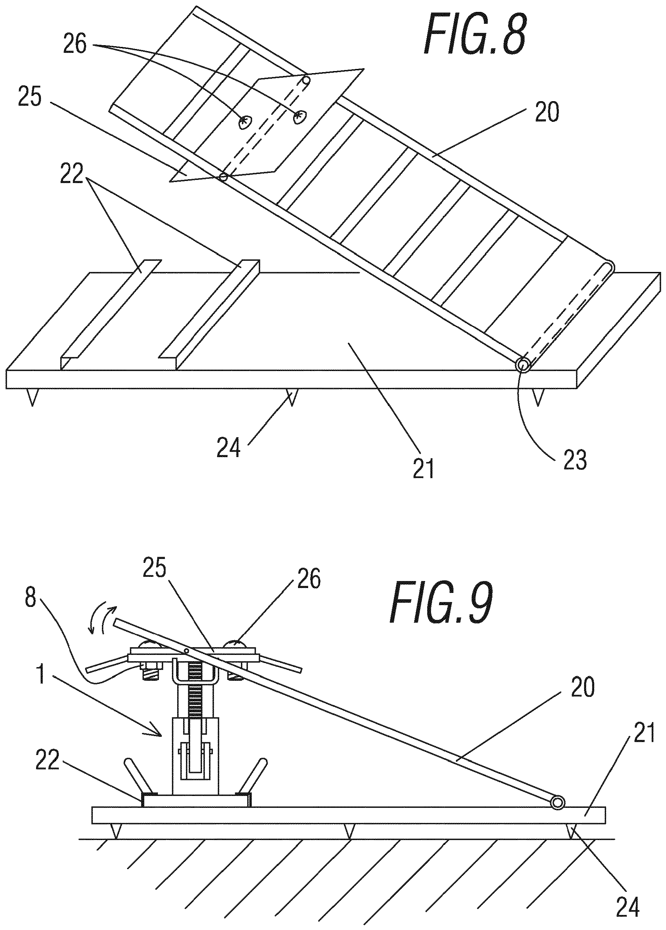

Figures 8 and 9 show a pusher element (20) intended to enable the handling of a vehicle, for example, when arranged in a position as shown in Figure 1. More specifically, this pusher element (20) that actuates as a wedge has an elongated body formed by two elongated longitudinal members on which a plurality of crossmembers are arranged, the lower end of the pusher element (20) being rotably coupled to a support base (21) made of metal material, while an area near the upper end of the pusher element (20) is coupled to the piston (4), wherein the stabiliser device (1) may be arranged on said support base (21). On the other hand, connecting the pusher element (20) with the piston (4) is performed by means of a plate (25) that is rotably coupled on the two longitudinal members of the pusher element (20), wherein the plate (25) is placed on a flat end (40) and is subsequently clamped by screws (26) passing through a corresponding nut (8), thereby ensuring that the plate (25) moves fixedly with the piston (4) during the upward and downward movement.

The rotary connection of the pusher element (20) on the support base (21) is carried out by using a fixed axis (23) and arranged on the support base (21), wherein said axis (23) is located in a corresponding housing in the pusher element (20).

Additionally, the support base (21) has a positioning means for fixedly positioning the stabiliser device (1) on said support base (21), such positioning means consisting of a pair of parallel guides (22) separated from each other, on which the stabiliser device (1) described above can be placed slidably, as shown in Figure 9, although the use of any other suitable positioning means will be apparent to one skilled in the art. It should be noted that such pair of guides (22) can be provided with a displacement mechanism for changing the relative position of the pair of guides (22) relative to the distance from the axis (23), thereby enabling the angle of inclination to be modified.

In another embodiment, there may be several pairs of guides on the support base, secured in different positions, and their corresponding coupling plates on the pusher element.

In addition, the support base (21) may also include anchoring means in order to firmly secure the support base (21) on the ground, which consists of a plurality of pointed elements (24) protruding from the bottom of the support base (21) in a downward direction.

The details, shapes and dimensions and other accessory elements as well as the materials used in the manufacture of the stabilisation system of the invention may be conveniently replaced by others which are technically equivalent and do not depart from the essential nature of the invention or from the scope defined by the claims provided hereinafter.

## Claims

1. Stabilisation system for supporting a vehicle or the like, in particular for accident rescue operations, that has a stabiliser device (1), wherein said stabiliser device (1) comprises:
an internally hollow elongated body (2), including a cylinder on the inside coupled to a movable piston (4) that extends axially through the elongated body (2) that is connected to at least one support region intended to be in contact with a region or surface of the vehicle to be supported, wherein height adjustment means are provided for adjusting the height between at least said support region and the movable piston (4).
locking means for securing the position of the piston relative to the cylinder, and
positioning means for positioning the piston (4) relative to the elongated body (2), **characterized by** the fact that said locking means comprise a gripping portion (9) secured to the movable piston (4) which can be resiliently coupled to a rotary retainer (10), rotary retainer (10) being coupled in a rotatory manner to a support (12) that projects laterally from the elongated body (2), so that when rotary retainer (10) is disengaged from the gripping portion (9), stabiliser device is able to be activated by extension of piston (4).

2. Stabilisation system according to claim 1, **characterised by** the fact that the height adjustment means of the stabiliser device (1) have an exteriorly threaded elongated rod (7) that is superiorly joined to the support region, wherein said elongated rod (7) can be coupled to a threaded orifice that is present on a portion affixed to the movable piston (4), preferably, a flat end (40).

3. Stabilisation system according to claim 1, **characterised by** the fact that it has two support regions each provided with a height adjustment means for adjusting the height between each of the support regions and the movable piston (4).

4. Stabilisation system according to claim 2, **characterised by** the fact that the elongated rod (7) and the support region are joined together by means of a ball joint.

5. Stabilisation system according to the previous claims, **characterised by** the fact that the gripping portion (9) is fixedly attached to a flat end (40) at the top of the movable piston (4).

6. Stabilisation system according to claim 5, **characterised by** the fact that it includes elastic means for rotating the rotary retainer (10).

7. Stabilisation system according to claim 1, **characterised by** the fact that the positioning means comprise a toothed elongated region (14) coupled to the cylinder and a grip (15) which can be coupled to said toothed region (14), which is associated with the elongated body and can be rotated, and elastic means that actuate the grip (15).

8. Stabilisation system according to claim 7, **characterised by** the fact that the grip (15) is connected to the elongated body by means of an outwardly projecting extension on which a rotary pivot (17) can be pivoted that passes through an orifice which is transversely arranged in the grip (15).

9. Stabilisation system according to claim 1, **characterised by** the fact that it includes an accessory (19) that can be removably mounted on the piston (4) having an additional contact zone to come into contact with part of the vehicle body to be handled.

10. Stabilisation system according to claim 9, **characterised by** the fact that the accessory that can be removably mounted (19) is formed by a single body having the additional contact zone (191) and an attachment zone (192) that can be adapted to the dimensions of the top of the piston (4), said attachment area being provided with a hook extension.

11. Stabilisation system according to claim 1, **characterised by** the fact that it comprises a pusher element which is comprised of an elongated body formed by two longitudinal members on which a plurality of crossmembers are arranged, the lower end of the pusher element being rotably coupled to a support base while an area near the upper end of the pusher element is removably coupled to the piston (4), wherein the stabiliser device is arranged on said support base.

12. Stabilisation system according to claim 11, **characterised by** the fact that the rotary connection of the pusher element on the support base is carried out using a fixed axis and arranged on the support base, wherein said axis is located in a corresponding housing in the pusher element.

13. Stabilisation system according to claim 11, **characterised by** the fact that the support base (21) includes anchoring means for attachment to the ground.

## Patentansprüche

1. Stabilisierungssystem zum Abstützen eines Fahrzeugs oder dergleichen, insbesondere für Unfallrettungseinsätze, das eine Stabilisierungsvorrichtung (1) aufweist, wobei die Stabilisierungsvorrichtung (1) umfasst:
einen innen hohlen langgestreckten Körper (2) mit einem Zylinder auf der Innenseite, der mit einem beweglichen Kolben (4) gekoppelt ist, der sich axial durch den langgestreckten Körper (2) erstreckt, der mit mindestens einem Stützbereich verbunden ist, der dazu vorgesehen ist, mit einem Bereich oder der Oberfläche des abzustützenden Fahrzeugs in Kontakt zu stehen, wobei Höhenverstellmittel zum Einstellen der Höhe zwischen mindestens dem Stützbereich und dem beweglichen Kolben (4) bereitgestellt sind.
Verriegelungsmittel zum Sichern der Position des Kolbens in Bezug auf den Zylinder und Positionierungsmittel zum Positionieren des Kolbens (4) in Bezug auf den langgestreckten Körper (2),
**gekennzeichnet dadurch, dass** die Verriegelungsmittel einen am beweglichen Kolben (4) gesicherten Greifabschnitt (9) umfassen, der federnd mit einem Drehhalter (10) gekoppelt werden kann, wobei der Drehhalter (10) drehbar mit einer Stütze (12) gekoppelt ist, die lateral von dem langgestreckten Körper (2) vorsteht, so dass, wenn der Drehhalter (10) von dem Griffabschnitt (9) gelöst wird, die Stabilisierungsvorrichtung durch Ausfahren des Kolbens (4) aktiviert werden kann.

2. Stabilisierungssystem nach Anspruch 1, **gekennzeichnet dadurch, dass** die Höhenverstellmittel der Stabilisierungsvorrichtung (1) einen langgestreckten Außengewindestab (7) aufweisen, der oben mit dem Stützbereich zusammengefügt ist, wobei der langgestreckte Stab (7) mit einer Gewindeöffnung gekoppelt werden kann, die an einem Abschnitt vorhanden ist, der an dem beweglichen Kolben (4) befestigt ist, vorzugsweise einem flachen Ende (40).

3. Stabilisierungssystem nach Anspruch 1, **gekennzeichnet dadurch, dass** es zwei Stützbereiche aufweist, die jeweils mit einem Höhenverstellmittel versehen sind, um die Höhe zwischen jedem der Stützbereiche und dem beweglichen Kolben (4) einzustellen.

4. Stabilisierungssystem nach Anspruch 2, **gekennzeichnet dadurch, dass** der langgestreckte Stab (7) und der Stützbereich mittels eines Kugelgelenks zusammengefügt sind.

5. Stabilisierungssystem nach den vorstehenden Ansprüchen, **gekennzeichnet dadurch, dass** der Greifabschnitt (9) fest an einem flachen Ende (40) an der Oberseite des beweglichen Kolbens (4) angebracht ist.

6. Stabilisierungssystem nach Anspruch 5, **gekennzeichnet dadurch, dass** es elastische Mittel zum Drehen des Drehhalters (10) einschließt.

7. Stabilisierungssystem nach Anspruch 1, **gekennzeichnet dadurch, dass** die Positionierungsmittel einen gezahnten langgestreckten Bereich (14) umfassen, die mit dem Zylinder und einem Griff (15) gekoppelt sind, der mit dem gezahnten Bereich (14) verbunden werden kann, der dem langgestreckten Körper zugeordnet ist und gedreht werden kann, und elastische Mittel, die den Griff (15) betätigen.

8. Stabilisierungssystem nach Anspruch 7, **gekennzeichnet dadurch, dass** der Griff (15) mit dem langgestreckten Körper durch einen nach außen vorstehenden Fortsatz verbunden ist, an dem ein Drehzapfen (17) schwenkbar ist, der durch eine quer im Griff (15) angeordnete Öffnung hindurchgeht.

9. Stabilisierungssystem nach Anspruch 1, **gekennzeichnet dadurch, dass** es ein abnehmbar am Kolben (4) anbringbares Zubehör (19) umfasst, das eine zusätzliche Kontaktzone aufweist, um mit einem zu handhabenden Teil des Fahrzeugkörpers in Kontakt zu kommen.

10. Stabilisierungssystem nach Anspruch 9, **gekennzeichnet dadurch, dass** das abnehmbar montierbare Zubehör (19) aus einem einzigen Körper mit der zusätzlichen Kontaktzone (191) und einer Anbringungszone (192) gebildet ist, die an die Abmessungen der Kolbenoberseite (4) angepasst werden kann, wobei der Befestigungsbereich mit einer Hakenverlängerung versehen ist.

11. Stabilisierungssystem nach Anspruch 1, **gekennzeichnet dadurch, dass** es ein Schubelement umfasst, das aus einem langgestreckten Körper besteht, der aus zwei Längsträgern gebildet ist, an denen eine Vielzahl von Querträgern angeordnet sind, wobei das untere Ende des Schubelements drehbar mit einer Stützbasis gekoppelt ist, während eine Fläche in der Nähe des oberes Ende des Schubelements abnehmbar mit dem Kolben (4) gekoppelt ist, wobei die Stabilisierungsvorrichtung auf der Stützbasis angeordnet ist.

12. Stabilisierungssystem nach Anspruch 11, **gekennzeichnet dadurch, dass** die Drehverbindung des Schubelements an der Stützbasis mit einer festen Achse ausgeführt ist und an der Stützbasis angeordnet ist, wobei sich die Achse in einem entsprechenden Gehäuse in dem Schubelement befindet.

13. Stabilisierungssystem nach Anspruch 11, **gekennzeichnet dadurch, dass** die Stützbasis (21) Verankerungsmittel zum Befestigen am Boden einschließt.

## Revendications

1. Système de stabilisation pour supporter un véhicule ou similaire, notamment pour les opérations de secours en cas d'accident, qui a un dispositif stabilisateur (1), dans lequel ledit dispositif stabilisateur (1) comprend :
un corps allongé creux intérieurement (2), incluant un cylindre à l'intérieur couplé à un piston mobile (4) qui s'étend axialement à travers le corps allongé (2) qui est connecté à au moins une région de support destinée à être en contact avec une région ou une surface du véhicule à supporter, dans lequel des moyens de réglage en hauteur sont prévus pour régler la hauteur entre au moins ladite région de support et le piston mobile (4).
des moyens de verrouillage pour sécuriser la position du piston au cylindre, et
des moyens de positionnement pour positionner le piston (4) par rapport au corps allongé (2), **caractérisé par le fait que** lesdits moyens de verrouillage comprennent une partie de préhension (9) sécurisée au piston mobile (4) qui peut être couplée de manière souple à un organe de retenue rotatif (10), un élément de retenue rotatif (10) étant couplé de manière rotative à un support (12) qui fait saillie latéralement depuis le corps allongé (2), de sorte que lorsque le dispositif de retenue rotatif (10) est désengagé de la partie de préhension (9), le dispositif stabilisateur peut être activé par extension de piston (4).

2. Système de stabilisation selon la revendication 1, **caractérisé par le fait que** les moyens de réglage en hauteur du dispositif stabilisateur (1) ont une tige allongée (7) filetée extérieurement qui est jointe supérieurement à la région de support, dans lequel ladite tige allongée (7) peut être couplée à un orifice fileté qui est présent sur une partie fixée du piston mobile (4), de préférence, une extrémité plate (40).

3. Système de stabilisation selon la revendication 1, **caractérisé par le fait qu'**il a deux régions de support pourvues chacune de moyens de réglage en hauteur pour régler la hauteur entre chacune des régions de support et le piston mobile (4).

4. Système de stabilisation selon la revendication 2, **caractérisé par le fait que** la tige allongée (7) et la région de support sont jointes au moyen d'une rotule.

5. Système de stabilisation selon la revendication précédente, **caractérisé par le fait que** la partie de préhension (9) est fixement relié à une extrémité plate (40) au-dessus du piston mobile (4).

6. Système de stabilisation selon la revendication 5, **caractérisé par le fait qu'**il inclut des moyens élastiques pour faire tourner l'élément de retenue rotatif (10).

7. Système de stabilisation selon la revendication 1, **caractérisé par le fait que** les moyens de positionnement comprennent une région allongée dentée (14) couplée au cylindre et une poignée (15) qui peut être couplée à ladite région dentée (14), qui est associée au corps allongé et peut être tournée, et des moyens élastiques qui actionnent la poignée (15).

8. Système de stabilisation selon la revendication 7, **caractérisé par le fait que** la poignée (15) est connectée au corps allongé au moyen d'une extension en saillie vers l'extérieur sur lequel peut pivoter un pivot rotatif (17) qui traverse un orifice qui est disposé transversalement dans la poignée (15).

9. Système de stabilisation selon la revendication 1, **caractérisé par le fait qu'**il inclut un accessoire (19) qui peut être monté de manière amovible sur le piston (4) ayant une zone de contact supplémentaire pour venir en contact avec une partie de la carrosserie du véhicule à manipuler.

10. Système de stabilisation selon la revendication 9, **caractérisé par le fait que** l'accessoire qui peut être monté de manière amovible (19) est formé d'un corps unique ayant la zone de contact supplémentaire (191) et une zone de liaison (192) qui peut être adaptée aux dimensions au-dessus du piston (4), ladite zone de liaison étant pourvue d'une extension de crochet.

11. Système de stabilisation selon la revendication 1, **caractérisé par le fait qu'**il comprend un élément poussoir qui est constitué d'un corps allongé formé de deux longerons sur lesquels sont disposées plusieurs traverses, l'extrémité inférieure de l'élément poussoir étant couplée de manière rotative à une base de support tandis qu'une zone proche de l'extrémité supérieure de l'élément poussoir est couplée de manière amovible au piston (4), dans lequel le dispositif stabilisateur est disposé sur ladite base de support.

12. Système de stabilisation selon la revendication 11, **caractérisé par le fait que** la connexion rotative de l'élément poussoir sur la base de support est réalisée en utilisant un axe fixe et disposé sur la base de support, dans lequel ledit axe est situé dans un logement correspondant dans l'élément poussoir.

13. Système de stabilisation selon la revendication 11, **caractérisé par le fait que** la base de support (21) inclut des moyens d'ancrage pour la liaison au sol.
